# EUROPEAN PATENT APPLICATION

(11) **EP 2 945 078 A1**
(43) Date of publication of application: **18.11.2015**
(21) Application number: 15166613.8
(22) Date of filing: 06.05.2015
(51) Int. Cl.: G06F 17/30

(54) **METHOD AND APPARATUS FOR MANAGING CONFIGURATION ENTRIES IN A CONFIGURATION SYSTEM**

(30) Priority: 15.05.2014 EP 14305710
(71) Applicant: Thomson Licensing, 92130 Issy-les-Moulineaux (FR)
(72) Inventor: Thibaut, Olivier, London, W43EQ (GB)
(74) Representative: Schmidt-Uhlig, Thomas

(57) **Abstract**

A method for managing configuration entries in a configuration system of an asset database and an apparatus (20) configured to perform the method are described. Each configuration entry comprises a regular expression for matching assets of the asset database. The apparatus (20) comprises an input (21) for receiving (10) a configuration entry. An analyzer (22) determines (11) whether the regular expression of the received configuration entry covers a regular expression of at least one configuration entry already present in the configuration system. If this is the case, the at least one configuration entry is automatically deleted (12) from the configuration system by a configuration entry handling unit (23) or a recommendation either to delete the at least one configuration entry from the configuration system or not to enter the received configuration entry in the configuration system is provided (13) via a user interface (24).

## Description

### FIELD OF THE INVENTION

The invention relates to a method and an apparatus for managing configuration entries in a configuration system, and more specifically to a method and an apparatus for managing configuration entries that are strings containing an unknown number of wildcard characters and literal characters.

### BACKGROUND OF THE INVENTION

In today's asset managing systems, e.g. in a video or visual effects production environment, tens of thousands of configuration entries need to be managed in a database. With an hierarchical context setup and the ability to use regular expressions as part of the configuration, it is important to ensure the configuration is as small as possible, so that it can be managed by administrators and understood by production.

Consider, for example, a configuration system with support for any number of configuration entries, where each of them may be a regular expression. The challenge is to keep the configuration as simple as possible.

Indeed, a first configuration entry could be defined that is matching assets named 'foobar*', and then another one that is looking for assets named '*bar*'. From the system's perspective, that would be a perfectly valid configuration. However, from the human maintainers perspective, this system could become bloated with many more regular expression entries than is actually necessary. For example, in the above case, just '*bar*' would match all the asset names matched by 'foobar*'.

There is some research on regular expressions inclusion, but this mostly concentrates on PERL standard regular expressions (SREs). These complex algorithms do not have the performance required to integrate them in a service platform receiving thousands of request per minute.

### SUMMARY OF THE INVENTION

It is an object of the present invention to propose an improved solution for managing configuration entries of a configuration system.

According to the invention, a method for managing configuration entries of a configuration system of an asset database, each configuration entry comprising a regular expression for matching assets of the asset database, comprises:
- receiving a configuration entry;
- determining whether the regular expression of the received configuration entry covers a regular expression of at least one configuration entry already present in the configuration system; and
- in case the regular expression of the received configuration entry covers a regular expression of at least one configuration entry already present in the configuration system, automatically deleting the at least one configuration entry from the configuration system or providing a recommendation to a user via a user interface either to delete the at least one configuration entry from the configuration system or not to enter the received configuration entry in the configuration system.

Accordingly, an apparatus configured to manage configuration entries of a configuration system of an asset database, each configuration entry comprising a regular expression for matching assets of the asset database, comprises:
- an input configured to receive a configuration entry;
- an analyzer configured to determine whether the regular expression of the received configuration entry covers a regular expression of at least one configuration entry already present in the configuration system; and
- at least one of a configuration entry handling unit configured to automatically delete the at least one configuration entry from the configuration system and a user interface configured to provide a recommendation to a user either to delete the at least one configuration entry from the configuration system or not to enter the received configuration entry in the configuration system in case the regular expression of the received configuration entry covers a regular expression of at least one configuration entry already present in the configuration system.

Also, a computer readable storage medium has stored therein instructions enabling managing configuration entries of a configuration system of an asset database, each configuration entry comprising a regular expression for matching assets of the asset database, the instructions, when executed by a computer, causing the computer to:
- receive a configuration entry;
- determine whether the regular expression of the received configuration entry covers a regular expression of at least one configuration entry already present in the configuration system; and
- in case the regular expression of the received configuration entry covers a regular expression of at least one configuration entry already present in the configuration system, automatically delete the at least one configuration entry from the configuration system or provide a recommendation to a user via a user interface either to delete the at least one configuration entry from the configuration system or not to enter the received configuration entry in the configuration system.

In order to check whether the received configuration entry covers at least one configuration entry already present in the configuration system, a test for mutual inclusion of two configuration entries is performed. In particular, the two simplified regular expressions "left" and "right" are compared to answer the following questions:
- does left include right?
- does right include left?
   And by extension:
- Are the expressions equal/mutually inclusive?

For the test a recursive implementation is used, which sequentially slices both "left" and "right" expressions around wildcard characters and attempts to determine inclusion/non-inclusion of the slices. The proposed test has a O(n) linear complexity, whatever the input expressions. Depending on the slice complexity, the test either provides an immediate answer, or it recurses into the slices and repeats. The complete process always results in a simple Boolean, non-ambiguous answer to the given problem. The required depth of recursion can be calculated prior to running the test.

Preferably, the test for mutual inclusion is limited to expressions using a regular expression language limited to simple capabilities, which users and administrators of the configuration system can easily learn. The test does not aim to resolve mutual inclusion of SREs. It can, however, be extended to support many SRE modifiers or sets that do not make use of conditionals, back-references, or other constructs that would require branching the resolution.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for managing configuration entries of a configuration system of an asset database; and
- Fig. 2: schematically depicts an apparatus configured to perform a method according to the invention.

### DETAILED DESCRIPTION OF PREFERED EMBODIMENTS

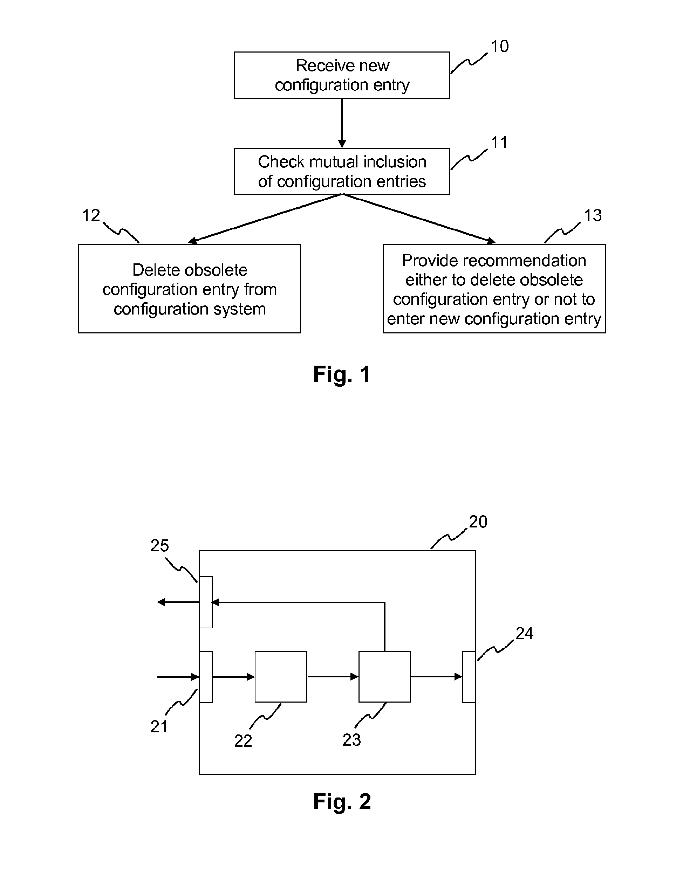

A method according to the invention for managing configuration entries of a configuration system of an asset database is schematically illustrated in Fig. 1. Each configuration entry comprises a regular expression for matching assets of the asset database. After receiving 10 a configuration entry it is determined 11 whether the regular expression of the received configuration entry covers a regular expression of at least one configuration entry already present in the configuration system. If this is the case, the at least one configuration entry is automatically deleted 12 from the configuration system or a recommendation is provided 13 to an administrator either to delete the at least one configuration entry from the configuration system or not to enter the received configuration entry in the configuration system.

Fig. 2 depicts an apparatus 20 configured to perform a method according to the invention. The apparatus 20 comprises an input 21 for receiving 10 a configuration entry, e.g. from a network or through interaction with a user. An analyzer 22 determines 11 whether the regular expression of the received configuration entry covers a regular expression of at least one configuration entry already present in the configuration system. If this is the case, the at least one configuration entry is automatically deleted 12 from the configuration system by a configuration entry handling unit 23 via a communication interface 25 or a recommendation either to delete the at least one configuration entry from the configuration system or not to enter the received configuration entry in the configuration system is provided 13 via a user interface 24. The analyzer 22 and the configuration entry handling unit 23 are either implemented as dedicated hardware or as software running on a processor. They may also be combined in a single unit. Also, the input 21 and the communication interface 25 may be combined into a single bi-directional interface.

In the following an algorithm suitable for performing the check 11 whether the regular expression of the received configuration entry covers a regular expression of at least one configuration entry that is already present shall be explained in detail.

The algorithm provides a callable method of the generic form "bool includes(string left, string right)", where "left" and "right" are regular strings containing an unknown number of wildcard characters "*", and other literal characters. The algorithm operates by gradually slicing "left" and "right" around wildcard characters. As an example, the string "foo*bar*" would result in the sliced sequence ["foo*", "*bar*"]. The sequences are then processed in parallel, starting from the extremities. As long as at least one of the sequences is longer than 2, the following check is applied on the extremities:

**Table 1**

| left\right | * | *b | b* | b |
|---|---|---|---|---|
| * | yes | yes | yes | yes |
| *a | no | if a>=b | no | yes |
| a* | no | no | if a>=b | yes |
| A | no | no | no | if b==A |

To understand this table, a few conventions need to be laid out:
- Lower case characters, such as 'a' or 'b', represent a regular expression. Expressions may contain any number of literals or wildcard characters.
- Upper case characters, such as 'A' or 'B', represent a literal. Literals may contain any number of literal characters, e.g. 'foo' or 'bar', but no wildcard.
- The asterisk character '*' represents a wildcard.

The result in the table shows the inclusion result of "right" in "left". So if the structure of "left" is "*", the single wildcard character, it can be noticed that the result is "yes", whatever the structure of "right" is. This means "*" includes any other expression or literal. The possible answers are as follows:
- "yes" means that "left" includes "right", and the solution can be returned immediately.
- "no" means that "left" cannot include "right", and the solution can be returned immediately.
- Other results mean that additional tests need to performed. The equality test is used if "left" is a literal, and this will only include "right" if "right" is the same literal. This can easily be tested and the answer can be returned immediately. The inclusion tests mean the algorithm needs to recurse down.

In the last case, when the algorithm needs to recurse down, the extremities of each "left" and "right" are discarded. For example, if "left" was "["*some*", "*complex*" "*expression"], the next iteration will only be looking at ["*complex*"], while an identical slicing operation is applied to "right".

Once the tests are down to sequences of a length below or equal to 2, they can be resolved by applying one of the following two additional result tables, in addition to the above:

**Table 2**

| left\right | *B* | *B | B* | B |
|---|---|---|---|---|
| *A* | if A in B | yes | yes | yes |
| *A | no | if A in B | no | yes |
| A* | no | no | if A in B | yes |
| A | no | no | no | if A==B |

This result table deals with the case where one member remains in each of the "left" and the "right" sequence, from which a result can immediately be derived. It is important to note that the conditionals are operations on pure literals. For example, the answer to "bar" in "foobar" is "yes", while the answer to "bar" in "foo" is "no".

The last case is resolved by this table:

**Table 3**

| left\right | C*D | C*y*D |
|---|---|---|
| A*B | if A==C and B==D | yes |
| A*x*B | no | if A==C and B==D and x>=y |

This deals with the case where both "left" and "right" start and end with literals enclosing a wild card. This is fairly simple to resolve, as it relies on splitting each side and comparing them using methods already described above. The most complex case, "A*x*B" and "C*y*D", requires to apply the comparisons described in Table 1 on each side, and to then recurse again.

To give a more specific example, a first configuration entry is defined that is matching assets named 'foobar*' and then another one that is matching assets named '*bar*'. In this case, just '*bar*' would match all the asset names matched by 'foobar*', so the system could automatically delete the 'foobar*' entry when '*bar*' is inserted. The inclusion check actually performs the following steps when the new configuration entry is inserted in the system:
1.
   left = *bar*
   right = foobar*
2.
   left = ['*' '*bar*' '*']
   right = ['foobar*', '*']
3. Check termination cases: left == ['*'] or right == ['*']? No.
4. Check simple cases: length(left) == 1 or length(right) == 1? No.
5. Check complex cases - examine right's left-most element: right[0] == '*'?
   No.
6. Check complex cases - examine right's right-most element: right[-1] == '*'?
   Yes.
7. Is left's right-most element different from '*'?
   No. It is now known that left and right's right-most members are mutually inclusive.
8. Slice out the right-most member of both
   left = ['*' '*bar*]
   right = ['foobar*']
9. Check termination cases: left == ['*'] or right == ['*']? No.
10. Check simple cases: length(left) == 1 or length(right) == 1?
   Yes, right is length 1.
11. Is left's left-most element '*'?
   Yes, it is now known that left is of the form *exp, while right starts with a literal.
12. Slice inclusion:
   left = '*bar*'
   right = 'foobar*'
13. Examine left slice: does it start with '*'?
   Yes.
14. Examine left slice: does it end with '*'? Yes. It is of the form *literal*.
15. Examine right slice: is it also of the form *literal*? No.
16. Inclusion is True.
   *bar* includes foobar*.

## Claims

1. A method for managing configuration entries of a configuration system of an asset database, each configuration entry comprising a regular expression for matching assets of the asset database, the method **comprising:**
- receiving (10) a configuration entry;
- determining (11) whether the regular expression of the received configuration entry covers a regular expression of at least one configuration entry already present in the configuration system; and
- in case the regular expression of the received configuration entry covers a regular expression of at least one configuration entry already present in the configuration system, automatically deleting (12) the at least one configuration entry from the configuration system or providing (13) a recommendation to a user via a user interface (24) either to delete the at least one configuration entry from the configuration system or not to enter the received configuration entry in the configuration system.

2. The method according to claim 1, **wherein** for determining (11) whether the regular expression of the received configuration entry covers a regular expression of at least one configuration entry already present in the configuration system an inclusion check is performed on the regular expression of the received configuration entry and the regular expressions of the configuration entries present in the configuration system.

3. The method according to claim 2, **wherein** the inclusion check comprises slicing the regular expressions of the configuration entries around wildcard characters.

4. An apparatus (20) configured to manage configuration entries of a configuration system of an asset database, each configuration entry comprising a regular expression for matching assets of the asset database, the apparatus (20) **comprising:**
- an input (21) configured to receive (10) a configuration entry;
- an analyzer (22) configured to determine (11) whether the regular expression of the received configuration entry covers a regular expression of at least one configuration entry already present in the configuration system; and
- at least one of a configuration entry handling unit (23) configured to automatically delete (12) the at least one configuration entry from the configuration system and a user interface (24) configured to provide (13) a recommendation to a user either to delete the at least one configuration entry from the configuration system or not to enter the received configuration entry in the configuration system in case the regular expression of the received configuration entry covers a regular expression of at least one configuration entry already present in the configuration system.

5. A computer readable storage medium having stored therein instructions enabling managing configuration entries of a configuration system of an asset database, each configuration entry comprising a regular expression for matching assets of the asset database, the instructions, when executed by a computer, causing the computer to:
- receive (10) a configuration entry;
- determine (11) whether the regular expression of the received configuration entry covers a regular expression of at least one configuration entry already present in the configuration system; and
- in case the regular expression of the received configuration entry covers a regular expression of at least one configuration entry already present in the configuration system, automatically delete (12) the at least one configuration entry from the configuration system or provide (13) a recommendation to a user via a user interface (24) either to delete the at least one configuration entry from the configuration system or not to enter the received configuration entry in the configuration system.
